# EUROPEAN PATENT APPLICATION

(11) **EP 4 586 667 A1**
(43) Date of publication of application: **16.07.2025**
(21) Application number: 23870259.1
(22) Date of filing: 08.09.2023
(51) Int. Cl.: H04W 24/02, H04W 24/08

(54) **INFORMATION TRANSMISSION METHOD AND COMMUNICATION APPARATUS**

(30) Priority: 28.09.2022 CN 202211189596
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); CHEN, Jun, Shenzhen, Guangdong 518129 (CN)
(74) Representative: Maiwald GmbH
(86) International application number: PCT/CN2023/117676
(87) International publication number: WO 2024/067020

(57) **Abstract**

This application provides an information transmission method and a communication apparatus. The method includes: A terminal device receives first indication information from a network device, where the first indication information indicates a priority of a first minimization of drive-tests MDT configuration; the terminal device determines a result of comparison between the priority of the first MDT configuration and a priority of a second MDT configuration; and the terminal device determines, based on the comparison result, whether to execute the first MDT configuration, where the second MDT configuration is an MDT configuration used by the terminal device in a measurement process. According to the foregoing technical solution, in this application, an MDT configuration with a higher priority used by the terminal device in the measurement process is not overwritten by an MDT configuration with a lower priority, so that the terminal device can use an appropriate MDT configuration to complete the measurement process, thereby improving MDT measurement efficiency.

## Description

This application claims priority to Chinese Patent Application No. 202211189596.5, filed with the China National Intellectual Property Administration on September 28, 2022 and entitled "INFORMATION TRANSMISSION METHOD AND COMMUNICATION APPARATUS", which is incorporated herein by reference in its entirety.

### TECHNICAL FIELD

This application relates to the field of communication technologies, and more specifically, to an information transmission method and a communication apparatus.

### BACKGROUND

Minimization of drive-tests (minimization of drive-tests, MDT) is a technology that enables a communication system to automatically collect and analyze a measurement report including location information. An operator subscribes to a terminal device of a user, and the terminal device performs measurement and reports a measurement result, to reduce workloads of manual drive tests.

Specifically, a network device sends an MDT configuration to the terminal device, and the terminal device performs MDT measurement based on the received MDT configuration. However, when the terminal device receives a plurality of MDT configurations sent by the network device, an MDT configuration newly received by the terminal device overwrites an MDT configuration used in an ongoing measurement process of the terminal device. As a result, the terminal device may fail to complete the measurement process.

### SUMMARY

This application provides an information transmission method and a communication apparatus, to improve efficiency of performing MDT measurement by a terminal device.

According to a first aspect, an information transmission method is provided. The information transmission method includes: A terminal device receives first indication information from a network device, where the first indication information indicates a priority of a first MDT configuration; the terminal device determines a result of comparison between the priority of the first MDT configuration and a priority of a second MDT configuration; and the terminal device determines, based on the comparison result, whether to execute the first MDT configuration, where the second MDT configuration is an MDT configuration used by the terminal device in a measurement process.

It may be understood that, that the second MDT configuration is an MDT configuration used by the terminal device in a measurement process may be: The terminal device is performing MDT measurement based on the second MDT configuration; or the terminal device completes a measurement task that is based on the second MDT configuration, but does not complete reporting of all measurement results that are based on the second MDT configuration.

Specifically, the terminal device determines the priority of the first MDT configuration based on the indication information sent by the network device, and compares the priority of the first MDT configuration with the priority of the second MDT configuration used by the terminal device in the measurement process, to determine the priority comparison result of the priority of the first MDT configuration and the priority of the second MDT configuration. The priority comparison result is used by the terminal device to determine whether to execute the first MDT configuration, in other words, the terminal device determines, based on the priority comparison result, whether to use the first MDT configuration to overwrite the second MDT configuration.

In conclusion, the terminal device determines, based on a result of comparison between priorities of MDT configurations, whether to execute a new MDT configuration. Therefore, an MDT configuration with a higher priority used by the terminal device in a measurement process is not directly overwritten by an MDT configuration with a lower priority, so that the terminal device can use an appropriate MDT configuration to complete the measurement process, thereby improving MDT measurement efficiency.

In addition, when the priority of the first MDT configuration is higher than the priority of the second MDT configuration, the terminal device may use the first MDT configuration to overwrite the second MDT configuration, and use a measurement result obtained based on the first MDT configuration to overwrite a measurement result obtained based on the second MDT configuration, so that the terminal device can complete a measurement task corresponding to the MDT configuration with a higher priority.

In a possible implementation, when the comparison result indicates that the priority of the first MDT configuration is lower than the priority of the second MDT configuration, the method further includes: The terminal device sends second indication information to the network device, where the second indication information indicates that the terminal device is not to execute the first MDT configuration.

After the terminal device determines, based on the priority comparison result, not to execute the first MDT configuration, the terminal device sends, to the network device, the indication information indicating that the terminal device is not to execute the first MDT configuration, and the network device determines, based on the indication information, not to send the first MDT configuration to the terminal device. In this way, the network device does not send, to the terminal device, the MDT configuration that the terminal device determines not to execute, thereby reducing signaling overheads and communication resources.

In a possible implementation, the second indication information includes at least one of the following: remaining measurement time of the second MDT configuration, or a remaining to-be-reported data amount in a measurement result corresponding to the second MDT configuration.

Specifically, in addition to indicating that the terminal device is not to execute the first MDT configuration, the second indication information may further include at least one of the remaining measurement time and the remaining to-be-reported data amount. The network device can determine, based on the information, final completion time of the second MDT configuration used by the terminal device in the measurement process.

In a possible implementation, the network device may send the first MDT configuration to the terminal device after the terminal device completes the measurement task that is based on the second MDT configuration.

In a possible implementation, the first indication information includes the first MDT configuration.

In a possible implementation, when the comparison result indicates that the priority of the first MDT configuration is higher than the priority of the second MDT configuration, the method further includes: The terminal device sends third indication information to the network device, where the third indication information indicates that the terminal device is to execute the first MDT configuration; and the terminal device receives first information from the network device, where the first information includes the first MDT configuration.

After the terminal device determines, based on the priority comparison result, to execute the first MDT configuration, the terminal device sends, to the network device, the indication information indicating that the terminal device is to execute the first MDT configuration, and the network device determines, based on the indication information, to send the first MDT configuration to the terminal device. In this way, the network device does not send, to the terminal device, the MDT configuration that the terminal device determines not to execute.

In a possible implementation, the method further includes: The terminal device performs MDT measurement based on the first MDT configuration.

Specifically, the priority of the first MDT configuration is higher than the priority of the second MDT configuration. In this way, the terminal device can complete a measurement task that is based on the MDT configuration with a higher priority.

In a possible implementation, the method further includes: The terminal device sends second information to the network device, where the second information includes the comparison result.

In this way, in this application, the network device can obtain the result of the comparison between priorities of the first MDT configuration and the second MDT configuration to adjust a subsequent MDT configuration delivery process, to avoid delivering an MDT configuration with a lower priority to the terminal device, thereby reducing signaling overheads and communication resources.

In a possible implementation, the second information further includes the priority of the second MDT configuration.

In this way, in this application, the network device can obtain priority information of the second MDT configuration to adjust a subsequent MDT configuration delivery process, to avoid delivering an MDT configuration whose priority is lower than that of the second MDT configuration to the terminal device, thereby reducing signaling overheads and communication resources.

According to a second aspect, an information transmission method is provided. The information transmission method includes: A network device receives configuration information from a core network element, where the configuration information includes a first MDT configuration and priority information of the first MDT configuration; and the network device sends first indication information to a terminal device, where the first indication information indicates a priority of the first MDT configuration.

In a possible implementation, the method further includes: The network device receives second indication information from the terminal device, where the second indication information indicates that the terminal device is not to execute the first MDT configuration.

In a possible implementation, the second indication information includes at least one of the following: remaining measurement time of a second MDT configuration, or a remaining to-be-reported data amount in a measurement result corresponding to the second MDT configuration, where the second MDT configuration is an MDT configuration used by the terminal device in a measurement process.

In a possible implementation, the second indication information may further include priority information of the second MDT configuration.

In a possible implementation, the method further includes: The network device sends the first MDT configuration to the terminal device after first time, where the first time is determined by the network device based on at least one of the remaining measurement time and the remaining to-be-reported data amount.

In a possible implementation, the first indication information includes the first MDT configuration.

In a possible implementation, the method further includes: The network device receives third indication information from the terminal device, where the third indication information indicates that the terminal device is to execute the first MDT configuration; and the network device sends first information to the terminal device, where the first information includes the first MDT configuration.

In a possible implementation, the method further includes: The network device receives second information from the terminal device, where the second information includes a result of comparison between the priority of the first MDT configuration and a priority of a second MDT configuration.

In a possible implementation, when the comparison result indicates that the priority of the first MDT configuration is higher than the priority of the second MDT configuration, the method further includes: The network device sends the first MDT configuration to the terminal device.

In a possible implementation, the method further includes: The network device sends the comparison result to the core network element.

In a possible implementation, the second information further includes the priority of the second MDT configuration.

According to a third aspect, an information transmission method is provided. The information transmission method includes: A network device receives first indication information from a terminal device, where the first indication information indicates a priority of a first MDT configuration; the network device determines a result of comparison between the priority of the first MDT configuration and a priority of a second MDT configuration; and the network device determines, based on the comparison result, whether to send the second MDT configuration to the terminal device, where the first MDT configuration is an MDT configuration used by the terminal device in a measurement process.

It may be understood that, that the first MDT configuration is an MDT configuration used by the terminal device in a measurement process may be: The terminal device is performing MDT measurement based on the first MDT configuration; or the terminal device completes a measurement task that is based on the first MDT configuration, but does not complete reporting of all measurement results that are based on the first MDT configuration.

Specifically, the network device determines the priority of the first MDT configuration based on the indication information sent by the terminal device, and compares the priority of the first MDT configuration with the priority of the second MDT configuration, to determine the priority comparison result of the priority of the first MDT configuration and the priority of the second MDT configuration. The priority comparison result is used by the network device to determine whether to deliver the second MDT configuration to the terminal device, in other words, the network device determines, based on the priority comparison result, whether to enable the terminal device to use the second MDT configuration to overwrite the first MDT configuration.

In conclusion, the network device determines, based on a result of comparison between priorities of MDT configurations, whether to deliver a new MDT configuration to the terminal device. When a priority of the new MDT configuration is lower than the priority of the MDT configuration used by the terminal device in the measurement process, the network device does not deliver the new MDT configuration to the terminal device. Therefore, the MDT configuration with a higher priority used by the terminal device in the measurement process is not directly overwritten by the MDT configuration with a lower priority, so that the terminal device can complete the measurement process, thereby improving MDT measurement efficiency.

In a possible implementation, when the comparison result indicates that the priority of the first MDT configuration is lower than the priority of the second MDT configuration, the method further includes: The network device sends first information to the terminal device, where the first information includes the second MDT configuration.

In this implementation, the priority of the second MDT configuration is higher than the priority of the first MDT configuration. The network device delivers the second MDT configuration to the terminal device, and the terminal device uses the second MDT configuration to overwrite the first MDT configuration, so that the terminal device can complete a measurement task corresponding to the MDT configuration with a higher priority.

In a possible implementation, the method further includes: The network device sends second indication information to the terminal device, where the second indication information indicates the terminal device to report the priority of the first MDT configuration to the network device.

In this way, in this application, the network device can obtain the priority of the first MDT configuration used by the terminal device in the measurement process.

In a possible implementation, the first indication information includes at least one of the following: remaining measurement time of the first MDT configuration, or a remaining to-be-reported data amount in a measurement result corresponding to the first MDT configuration.

Specifically, in addition to indicating the priority of the first MDT configuration, the first indication information may further include at least one of the remaining measurement time and the remaining to-be-reported data amount. The network device can determine, based on the information, final completion time of the second MDT configuration used by the terminal device in the measurement process.

Further, the network device may send the second MDT configuration to the terminal device after the terminal device completes the measurement task that is based on the first MDT configuration.

In a possible implementation, when the comparison result indicates that the priority of the first MDT configuration is higher than the priority of the second MDT configuration, the method further includes: The network device sends the second MDT configuration to the terminal device after first time, where the first time is determined by the network device based on at least one of the remaining measurement time and the remaining to-be-reported data amount.

In this way, in this application, the terminal device can continue to perform MDT measurement that is based on the second MDT configuration after completing the MDT measurement that is based on the first MDT configuration.

In a possible implementation, the method further includes: The network device sends the comparison result to a core network element.

Specifically, after receiving the comparison result reported by the network device, the core network element may adjust a priority of a subsequent MDT configuration based on the comparison result.

In a possible implementation, the method further includes: The network device receives configuration information from the core network element, where the configuration information includes the second MDT configuration and priority information of the second MDT configuration.

According to a fourth aspect, an information transmission method is provided. The information transmission method includes: A terminal device receives first indication information from a network device, where the first indication information indicates the terminal device to report a priority of a first MDT configuration to the network device; and the terminal device sends second indication information to the network device, where the second indication information indicates the priority of the first MDT configuration, where the first MDT configuration is an MDT configuration used by the terminal device in a measurement process.

In a possible implementation, the method further includes: The terminal device receives first information from the network device, where the first information includes a second MDT configuration, where a priority of the second MDT configuration is higher than the priority of the first MDT configuration.

In a possible implementation, the second indication information includes at least one of the following: remaining measurement time of the first MDT configuration, or a remaining to-be-reported data amount in a measurement result corresponding to the first MDT configuration.

According to a fifth aspect, an information transmission method is provided. The information transmission method includes: A core network element sends first configuration information to a network device, where the first configuration information includes a first MDT configuration and priority information of the first MDT configuration; and the core network element sends second configuration information to the network device, where the second configuration information includes a second MDT configuration and priority information of the second MDT configuration.

In a possible implementation, the method further includes: The core network element receives a result that is of comparison between a priority of the first MDT configuration and a priority of the second MDT configuration and that is from the network device.

Specifically, after receiving the comparison result reported by the network device, the core network element may adjust a priority of a subsequent MDT configuration based on the comparison result.

According to a sixth aspect, a communication apparatus is provided. The communication apparatus may be used in the terminal device in the first aspect. The communication apparatus may be the terminal device, an apparatus (for example, a chip, a chip system, or a circuit) in the terminal device, or an apparatus that can be used in cooperation with the terminal device.

In a possible implementation, the communication apparatus may include modules or units that are in one-to-one correspondence with the methods/operations/steps/actions described in the first aspect. The modules or units may be implemented by a hardware circuit, software, or a combination of a hardware circuit and software.

In a possible implementation, the communication apparatus includes: a transceiver unit, configured to receive first indication information from a network device, where the first indication information indicates a priority of a first MDT configuration; and a processing unit, configured to determine a result of comparison between the priority of the first MDT configuration and a priority of a second MDT configuration, where the processing unit is further configured to determine, based on the comparison result, whether to execute the first MDT configuration, where the second MDT configuration is an MDT configuration used by the communication apparatus in a measurement process.

In a possible implementation, the transceiver unit is further configured to send second indication information to the network device, where the second indication information indicates that the communication apparatus is not to execute the first MDT configuration.

In a possible implementation, the second indication information includes at least one of the following: remaining measurement time of the second MDT configuration, or a remaining to-be-reported data amount in a measurement result corresponding to the second MDT configuration.

In a possible implementation, the first indication information includes the first MDT configuration.

In a possible implementation, the transceiver unit is further configured to send third indication information to the network device, where the third indication information indicates that the communication apparatus is to execute the first MDT configuration; and the transceiver unit is further configured to receive first information from the network device, where the first information includes the first MDT configuration.

In a possible implementation, the processing unit is further configured to perform MDT measurement based on the first MDT configuration.

In a possible implementation, the transceiver unit is further configured to send second information to the network device, where the second information includes the comparison result.

In a possible implementation, the second information further includes the priority of the second MDT configuration.

According to a seventh aspect, a communication apparatus is provided. The communication apparatus may be used in the network device in the second aspect. The communication apparatus may be the network device, an apparatus (for example, a chip, a chip system, or a circuit) in the network device, or an apparatus that can be used in cooperation with the network device.

In a possible implementation, the communication apparatus may include modules or units that are in one-to-one correspondence with the methods/operations/steps/actions described in the second aspect. The modules or units may be implemented by a hardware circuit, software, or a combination of a hardware circuit and software.

In a possible implementation, the communication apparatus includes: a transceiver unit, configured to receive configuration information from a core network element, where the configuration information includes a first MDT configuration and priority information of the first MDT configuration, where the transceiver unit is further configured to send first indication information to a terminal device, where the first indication information indicates a priority of the first MDT configuration.

In a possible implementation, the transceiver unit is further configured to receive second indication information from the terminal device, where the second indication information indicates that the terminal device is not to execute the first MDT configuration.

In a possible implementation, the second indication information includes at least one of the following: remaining measurement time of a second MDT configuration, or a remaining to-be-reported data amount in a measurement result corresponding to the second MDT configuration, where the second MDT configuration is an MDT configuration used by the terminal device in a measurement process.

In a possible implementation, the transceiver unit is further configured to send the first MDT configuration to the terminal device after first time, where the first time is determined by the communication apparatus based on at least one of the remaining measurement time and the remaining to-be-reported data amount.

In a possible implementation, the first indication information includes the first MDT configuration.

In a possible implementation, the transceiver unit is further configured to receive third indication information from the terminal device, where the third indication information indicates that the terminal device is to execute the first MDT configuration; and the transceiver unit is further configured to send first information to the terminal device, where the first information includes the first MDT configuration.

In a possible implementation, the transceiver unit is further configured to receive second information from the terminal device, where the second information includes a result of comparison between the priority of the first MDT configuration and a priority of a second MDT configuration.

In a possible implementation, the transceiver unit is further configured to send the first MDT configuration to the terminal device.

In a possible implementation, the transceiver unit is further configured to send the comparison result to the core network element.

In a possible implementation, the second information further includes the priority of the second MDT configuration.

According to an eighth aspect, a communication apparatus is provided. The communication apparatus may be used in the network device in the third aspect. The communication apparatus may be the network device, an apparatus (for example, a chip, a chip system, or a circuit) in the network device, or an apparatus that can be used in cooperation with the network device.

In a possible implementation, the communication apparatus may include modules or units that are in one-to-one correspondence with the methods/operations/steps/actions described in the third aspect. The modules or units may be implemented by a hardware circuit, software, or a combination of a hardware circuit and software.

In a possible implementation, the communication apparatus includes: a transceiver unit, configured to receive first indication information from a terminal device, where the first indication information indicates a priority of a first MDT configuration; and a processing unit, configured to determine a result of comparison between the priority of the first MDT configuration and a priority of a second MDT configuration, where the processing unit is further configured to determine, based on the comparison result, whether to send the second MDT configuration to the terminal device, where the first MDT configuration is an MDT configuration used by the terminal device in a measurement process.

In a possible implementation, the transceiver unit is further configured to send first information to the terminal device, where the first information includes the second MDT configuration.

In a possible implementation, the transceiver unit is further configured to send second indication information to the terminal device, where the second indication information indicates the terminal device to report the priority of the first MDT configuration to the communication apparatus.

In a possible implementation, the first indication information includes at least one of the following: remaining measurement time of the first MDT configuration, or a remaining to-be-reported data amount in a measurement result corresponding to the first MDT configuration.

In a possible implementation, the transceiver unit is further configured to send the second MDT configuration to the terminal device after first time, where the first time is determined by the communication apparatus based on at least one of the remaining measurement time and the remaining to-be-reported data amount.

In a possible implementation, the transceiver unit is further configured to send the comparison result to a core network element.

In a possible implementation, the transceiver unit is further configured to receive configuration information from the core network element, where the configuration information includes the second MDT configuration and priority information of the second MDT configuration.

According to a ninth aspect, a communication apparatus is provided. The communication apparatus may be used in the terminal device in the fourth aspect. The communication apparatus may be the terminal device, an apparatus (for example, a chip, a chip system, or a circuit) in the terminal device, or an apparatus that can be used in cooperation with the terminal device.

In a possible implementation, the communication apparatus may include modules or units that are in one-to-one correspondence with the methods/operations/steps/actions described in the fourth aspect. The modules or units may be implemented by a hardware circuit, software, or a combination of a hardware circuit and software.

In a possible implementation, the communication apparatus includes: a transceiver unit, configured to receive first indication information from a network device, where the first indication information indicates the communication apparatus to report a priority of a first MDT configuration to the network device; and the transceiver unit is further configured to send second indication information to the network device, where the second indication information indicates the priority of the first MDT configuration, where the first MDT configuration is an MDT configuration used by the communication apparatus in a measurement process.

In a possible implementation, the transceiver unit is further configured to receive first information from the network device, where the first information includes a second MDT configuration, where a priority of the second MDT configuration is higher than the priority of the first MDT configuration.

In a possible implementation, the second indication information includes at least one of the following: remaining measurement time of the first MDT configuration, or a remaining to-be-reported data amount in a measurement result corresponding to the first MDT configuration.

According to a tenth aspect, a communication apparatus is provided. The communication apparatus may be used in the core network element in the fifth aspect. The communication apparatus may be the core network element, an apparatus (for example, a chip, a chip system, or a circuit) in the core network element, or an apparatus that can be used in cooperation with the core network element.

In a possible implementation, the communication apparatus may include modules or units that are in one-to-one correspondence with the methods/operations/steps/actions described in the fifth aspect. The modules or units may be implemented by a hardware circuit, software, or a combination of a hardware circuit and software.

In a possible implementation, the communication apparatus includes: a transceiver unit, configured to send first configuration information to a network device, where the first configuration information includes a first MDT configuration and priority information of the first MDT configuration, where the transceiver unit is further configured to send second configuration information to the network device, where the second configuration information includes a second MDT configuration and priority information of the second MDT configuration.

In a possible implementation, the transceiver unit is further configured to receive a result that is of comparison between a priority of the first MDT configuration and a priority of the second MDT configuration and that is from the network device.

According to an eleventh aspect, a communication apparatus is provided, and includes a processor. The processor is configured to: execute a computer program or instructions, or use a logic circuit, to enable the communication apparatus to perform the method according to any one of the first aspect and the possible implementations of the first aspect, or enable the communication apparatus to perform the method according to any one of the second aspect and the possible implementations of the second aspect, or enable the communication apparatus to perform the method according to any one of the third aspect and the possible implementations of the third aspect, or enable the communication apparatus to perform the method according to any one of the fourth aspect and the possible implementations of the fourth aspect, or enable the communication apparatus to perform the method according to any one of the fifth aspect and the possible implementations of the fifth aspect.

In a possible implementation, the apparatus further includes a memory, and the memory is configured to store the computer program or the instructions.

Optionally, the processor and the memory are integrated together, or the processor and the memory are separately disposed.

**In** another possible implementation, the memory is located outside the communication apparatus.

**In** a possible implementation, the communication apparatus further includes a communication interface, and the communication interface is configured to input and/or output a signal.

For example, the communication interface may be a transceiver, a circuit, a bus, a module, or another type of communication interface.

According to a twelfth aspect, a communication apparatus is provided, and includes a logic circuit and an input/output interface. The input/output interface is configured to output and/or input a signal, and the logic circuit is configured to: perform the method according to any one of the first aspect and the possible implementations of the first aspect, or perform the method according to any one of the second aspect and the possible implementations of the second aspect, or perform the method according to any one of the third aspect and the possible implementations of the third aspect, or perform the method according to any one of the fourth aspect and the possible implementations of the fourth aspect, or perform the method according to any one of the fifth aspect and the possible implementations of the fifth aspect.

According to a thirteenth aspect, a computer-readable storage medium is provided, and includes a computer program or instructions. When the computer program or the instructions are run on a computer, the computer is enabled to perform the method according to any one of the first aspect and the possible implementations of the first aspect, or the computer is enabled to perform the method according to any one of the second aspect and the possible implementations of the second aspect, or the computer is enabled to perform the method according to any one of the third aspect and the possible implementations of the third aspect, or the computer is enabled to perform the method according to any one of the fourth aspect and the possible implementations of the fourth aspect, or the computer is enabled to perform the method according to any one of the fifth aspect and the possible implementations of the fifth aspect.

According to a fourteenth aspect, a computer program product is provided, and includes instructions. When the instructions are run on a computer, the computer is enabled to perform the method according to any one of the first aspect and the possible implementations of the first aspect, or the computer is enabled to perform the method according to any one of the second aspect and the possible implementations of the second aspect, or the computer is enabled to perform the method according to any one of the third aspect and the possible implementations of the third aspect, or the computer is enabled to perform the method according to any one of the fourth aspect and the possible implementations of the fourth aspect, or the computer is enabled to perform the method according to any one of the fifth aspect and the possible implementations of the fifth aspect.

According to a fifteenth aspect, an embodiment of this application further provides a communication apparatus, configured to perform the method according to the first aspect and the possible implementations of the first aspect, or configured to perform the method according to the fourth aspect and the possible implementations of the fourth aspect.

According to a sixteenth aspect, an embodiment of this application further provides a communication apparatus, configured to perform the method according to the second aspect and the possible implementations of the second aspect, or configured to perform the method according to the third aspect and the possible implementations of the third aspect.

According to a seventeenth aspect, an embodiment of this application further provides a communication system, including a network device and a core network. The network device may perform the method according to the second aspect or the third aspect and the possible implementations of the second aspect or the third aspect, and the core network may perform the method according to the fifth aspect and the possible implementations of the fifth aspect.

In a possible implementation, the communication system further includes a terminal device, and the terminal device may perform the method according to the first aspect or the fourth aspect and the possible implementations of the first aspect or the fourth aspect.

### BRIEF DESCRIPTION OF DRAWINGS

FIG. 1 is a diagram of an architecture of a communication system to which an embodiment of this application is applicable;
FIG. 2 is a schematic interaction flowchart of an information transmission method 200 according to an embodiment of this application;
FIG. 3 is a schematic interaction flowchart of an information transmission method 300 according to an embodiment of this application;
FIG. 4 is a block diagram of a structure of a communication apparatus 400 according to an embodiment of this application;
FIG. 5 is a block diagram of a structure of a communication apparatus 500 according to an embodiment of this application;
FIG. 6 is a block diagram of a structure of a communication apparatus 600 according to an embodiment of this application;
FIG. 7 is a block diagram of a structure of a communication apparatus 700 according to an embodiment of this application; and
FIG. 8 is a block diagram of a structure of a communication apparatus 800 according to an embodiment of this application.

### DESCRIPTION OF EMBODIMENTS

The following describes technical solutions in this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, for example, a new radio (new radio, NR) system, and an evolved system after 5G, for example, a 5.5G system or a 6th generation (6th generation, 6G) system.

A scenario to which this application is applicable includes but is not limited to scenarios such as terrestrial cellular communication, a non-terrestrial communication network (non-terrestrial network, NTN), vehicle-to-everything (vehicle-to-everything, V2X), integrated access and backhaul (integrated access and backhaul, IAB), and reconfigurable smart surface (reconfigurable intelligent surface, RIS) communication. An NTN system includes a non-terrestrial device, and the non-terrestrial device may be used as a base station, or may be used as a terminal device, or may be used as a relay device. The non-terrestrial device may be an uncrewed aerial vehicle, a hot air balloon, a low earth orbit satellite, a medium earth orbit satellite, a high earth orbit satellite, a high-altitude platform station (high-altitude platform station, HAPS) device, or the like.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to an FDD system/a TDD system. The technical solutions in embodiments of this application are applicable to not only a low-frequency scenario (sub-6G), but also a high-frequency scenario (above 6 GHz), terahertz, optical communication, and the like. The technical solutions in embodiments of this application are applicable to not only communication between a network device and a terminal, but also communication between network devices, communication between terminals, communication in the internet of vehicles, communication in the internet of things, communication in the industrial internet, and the like.

The technical solutions in embodiments of this application may be applied to a scenario in which the terminal is connected to a single base station. A base station connected to the terminal and a core network (core network, CN) connected to the base station are in a same standard or different standards. For example, the CN is a 5G CN, the base station is a 5G base station, and the 5G base station is directly connected to the 5G CN. Alternatively, the CN is a 5G CN, the base station is a 4G base station, and the 4G base station is directly connected to a 5G core. The technical solutions in embodiments of this application are also applicable to a dual connectivity (dual connectivity, DC) scenario in which the terminal is connected to at least two base stations.

The terminal device in embodiments of this application may be a device having wireless sending and receiving functions, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, an apparatus configured to implement a function of the terminal device may be the terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete component.

The network device in embodiments of this application is a device having wireless sending and receiving functions, and is an access network device configured to communicate with the terminal device. The access network device may be a node in a radio access network (radio access network, RAN), and may be referred to as a base station, or may be referred to as a RAN node. The access network device may alternatively be a device having some or all functions of a base station, for example, may include a central unit (central unit, CU) and/or a distributed unit (distributed unit, DU). The CU completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control (radio link control, RLC) layer and a medium access control (medium access control, MAC) layer of the base station, and may further complete some or all of functions of a physical layer. For specific descriptions of the protocol layers, refer to related technical specifications of the 3rd generation partnership project (3rd Generation Partnership Project, 3GPP). Division of protocol layer functions of the CU and the DU is not limited to the foregoing examples, provided that the CU and the DU can jointly complete the functions of the base station. In addition, a function of the CU may be implemented by a plurality of entities. For example, the function of the CU may be further divided. For example, functions of a control plane (control plane, CP) and a user plane (user plane, UP) of the CU are separated, to form a CU-CP and a CU-UP. For example, the CU-CP and the CU-UP may be implemented by different function entities, and are connected through an E1 interface. The CU-CP and the CU-UP may be coupled to the DU. A working procedure of the network device in embodiments of this application may be completed by the CU-CP.

Specifically, in embodiments of this application, when the access network device uses a CU-DU split architecture, the CU performs priority determining and the like, and the DU is used only as an interaction medium between the CU and the terminal device. For example, the DU sends, to UE through an air interface, a configuration with a higher priority delivered by the CU, or receives a priority of an existing MDT configuration, a priority determining result, or the like reported by the terminal device, and then forwards the priority of the existing MDT configuration, the priority determining result, or the like to the CU. If the CU is further divided into the CU-CP and the CU-UP, the CU-CP completes a function of the CU, and the CU-UP may not participate.

It should be understood that, in embodiments of this application, the access network device may be an evolved NodeB (evolved NodeB, eNB or eNodeB) in LTE, a base station in a 5G network like a next generation NodeB (gNodeB, gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like.

The network device in embodiments of this application may further include base stations in various forms, for example, a macro base station, a micro base station (also referred to as a small cell), a relay station, a transmission point (transmitting and receiving point, TRP), a transmitting point (transmitting point, TP), a mobile switching center, and a device that functions as a base station in device-to-device (device-to-device, D2D), vehicle-to-everything (vehicle-to-everything, V2X), and machine-to-machine (machine, M2M) communication, and a network device in the NTN communication system. This is not specifically limited in embodiments of this application. In embodiments of this application, an apparatus configured to implement a function of the network device may be the network device, or may be an apparatus that can support the network device in implementing the function, for example, a chip system. The apparatus may be installed in the network device or used in cooperation with the network device. In embodiments of this application, the chip system may include a chip, or may include a chip and another discrete component.

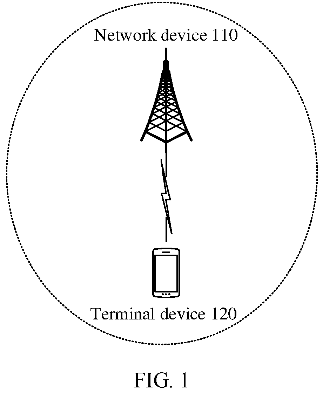

FIG. 1 is a diagram of a communication system 100 to which an embodiment of this application is applicable. As shown in FIG. 1, the communication system 100 includes a network device 110 and a terminal device 120. A quantity of terminal devices 120 and a quantity of network devices 110 included in the communication system 100 are not limited in this embodiment of this application.

It should be understood that FIG. 1 is merely an example for understanding, and cannot limit the protection scope claimed in this application. The terminal device 120 may be any terminal device listed above, and the network device 110 may be any network device listed above.

Optionally, the communication system 100 may further include a core network element 130 (not shown in FIG. 1). The core network element in this embodiment of this application corresponds to different devices in different communication systems. For example, the core network element may be a mobility management entity (mobility management entity, MME) and/or a serving gateway (serving gateway, S-GW) in a core network of an LTE communication system, that is, an evolved packet core (evolved packet core, EPC), or may be one or more of an access and mobility management function (access and mobility management function, AMF) network element, a session management function (session management function, SMF) network element, a user plane function (user plane function, UPF) network element, or the like in a 5G core (5G core, 5GC). Information exchange exists between the core network element 130 and the network device 110.

The following describes technical terms related to the technical solutions disclosed in embodiments of this application.

### 1. MDT

For example, measurement types related to an MDT technology are classified into the following types.
(1) Signal level measurement: The terminal device measures a signal level of a radio signal, and reports a measurement result of the signal level of the radio signal to the network device.
(2) Quality of service (quality of service, QoS) measurement: The network device may perform QoS measurement (for example, service traffic, service throughput, or service delay measurement). The terminal device may also perform QoS measurement, for example, uplink processing delay measurement. The network device and the terminal device may also jointly perform QoS measurement, for example, air interface delay measurement.
(3) Accessibility measurement: The terminal device records radio resource control (radio resource control, RRC) connection establishment failure information, and reports the information to the network device.

The terminal device may perform MDT measurement on a cell on which the terminal device camps or a cell accessed by the terminal device.

In this application, unless otherwise specified, measurement is MDT measurement, a measurement task is an MDT measurement task, and a measurement result is an MDT measurement result. Details are not described below.

For example, MDT types (or referred to as MDT modes) include logged MDT (logged MDT) and immediate MDT (immediate MDT).

Logged MDT measurement is MDT measurement performed by a terminal device in a radio resource control (radio resource control, RRC) idle (idle) state or an RRC inactive (inactive) state. The logged MDT is used to measure strength of a received signal. If a network side configures the terminal device to perform MDT measurement when the terminal device is in the idle state or the inactive state, when the terminal device enters a connected state, the terminal device no longer continues to perform MDT measurement based on a configuration of the MDT measurement performed by the terminal device in the idle state or the inactive state. If the network side further expects to obtain a result of the MDT measurement, the network side may configure measurement information of the MDT measurement performed by the terminal device in the connected state. Immediate MDT measurement is MDT measurement performed by the terminal device in the RRC connected state. The immediate MDT is used to measure at least one of a data amount, a throughput, a packet transmission delay, a packet loss rate, or a processing delay of the terminal device.

For the logged MDT, when the terminal device is in the RRC connected state, the network device configures related information about the logged MDT for the terminal device, for example, notifies the configuration information of the logged MDT by using an RRC message. When entering the RRC idle state or the RRC inactive state, the terminal device records a corresponding measurement result based on a corresponding logged MDT configuration. When the terminal device initiates an RRC connection to the network device, the terminal device includes indication information in an RRC message (for example, includes the indication information in an RRCSetupComplete message), and the indication information indicates that the terminal device records a logged MDT-based measurement result. The network device sends, to the terminal device, a request for a logged MDT record, and then the terminal device sends the logged MDT measurement result to the network device. Alternatively, the network device may send, to the terminal device by using UEInformationRequest, a request for a logged MDT record, and then the terminal device sends the logged MDT record to the network device by using UEInformationResponse.

The network device may initiate an MDT measurement collection task of the terminal device. There are two types of MDT measurement collection tasks: signaling-based MDT (signaling-based MDT) and management-based MDT (management-based MDT). The signaling-based MDT is MDT for a specific terminal device. The network device receives, from a core network (core network, CN), a message for executing MDT for the terminal device. The management-based MDT is not MDT for a specific terminal device. The network device receives a message for executing MDT from an operation, administration and maintenance (operation, administration and maintenance, OAM). The network device may select an appropriate terminal device from a plurality of terminal devices in a cell managed by the network device to perform MDT measurement. Both the two types of MDT may include logged MDT and immediate MDT.

For the signaling-based MDT, the CN sends an MDT configuration, a trace collection entity (trace collection entity, TCE), an IP address, and the like to the network device. The MDT configuration includes: an MDT type, for example, indicating that the MDT configuration corresponds to immediate MDT or logged MDT; information about an area of scope (area of scope) for performing MDT measurement; and a measurement item. If the measurement is triggered periodically, a specific periodicity value may be further included. If the measurement is triggered by an event, a specific event type may be further included. In addition, the MDT configuration may further include a public land mobile communication network (public land mobile network, PLMN) list corresponding to the signaling-based MDT.

Different communication systems may configure MDT for the terminal device. For example, both an LTE system and an NR system support configuring logged MDT for the terminal device, and the logged MDT may be management-based MDT or signaling-based MDT. In the NR system, an AMF delivers an MDT configuration to the network device through an NG interface. In the LTE system, an MME delivers an MDT configuration to the network device through an S1 interface. In addition, if the terminal device supports access to another type of access network, the terminal device may also receive an MDT configuration applicable to MDT measurement performed in the corresponding access network. For example, if the terminal device supports access to a non-public network (non-public network, NPN), the terminal device may receive an NPN-related MDT configuration.

When the terminal device locally has an MDT configuration that is being measured, or when the terminal device locally stores an MDT measurement result that has not been reported, and the terminal device receives a new MDT configuration, the newly received MDT configuration overwrites the MDT configuration used by the terminal device in a current measurement process. In other words, the terminal device performs measurement by using the new MDT configuration, stores a corresponding measurement result, and deletes the original MDT configuration and measurement result. As a result, the terminal device may fail to complete the measurement process, and the MDT measurement is inaccurate.

In view of the foregoing technical problem, this application provides an information transmission method and a communication apparatus, to improve efficiency of performing MDT measurement by the terminal device.

The following describes the information transmission method and the communication apparatus in embodiments of this application with reference to the accompanying drawings.

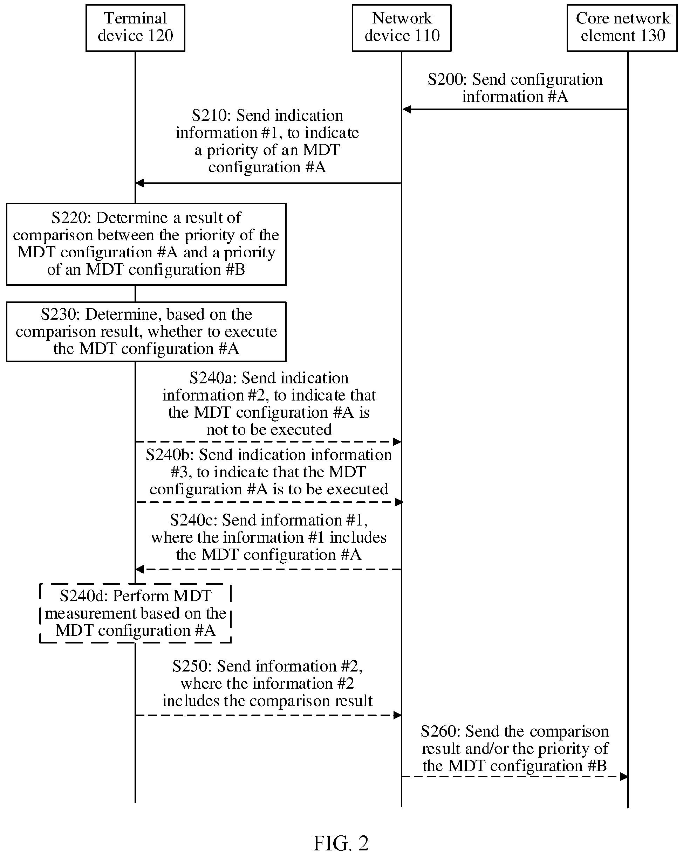

FIG. 2 is a schematic interaction flowchart of an information transmission method 200 according to an embodiment of this application. The method procedure in FIG. 2 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 2, the method 200 includes the following steps.

S200: The network device 110 receives configuration information #A from a core network element 130.

Specifically, the configuration information #A includes an MDT configuration #A and priority information of the MDT configuration #A. A type of a core network in which the core network element 130 is located is not limited in this application. For example, the core network element 130 may be an AMF, or may be an MME.

S210: The network device 110 sends indication information #1 to the terminal device 120, to indicate a priority of the MDT configuration #A.

Correspondingly, the terminal device 120 receives the indication information #1 from the network device 110.

Specifically, the terminal device 120 determines the priority of the MDT configuration #A based on the indication information #1.

Optionally, that the indication information #1 indicates the priority of the MDT configuration #A may alternatively be understood as: The indication information #A includes the priority information of the MDT configuration #A.

S220: The terminal device 120 determines a result of comparison between the priority of the MDT configuration #A and a priority of an MDT configuration #B.

It should be understood that a type of the MDT configuration is not limited in this application. For example, the MDT configuration may be a signaling-based MDT configuration or a management-based MDT configuration, or may be immediate MDT or logged MDT. In addition, a radio access technology (radio access technology, RAT), for example, NR or LTE, that corresponds to the MDT configuration is not limited. For example, the MDT configuration #A corresponds to the NR, and the MDT configuration #B corresponds to the LTE.

In a possible implementation, both the MDT configuration #A and the MDT configuration #B may be configurations corresponding to the logged MDT, or may be configurations corresponding to the immediate MDT; or one configuration may be a configuration corresponding to the logged MDT, and the other configuration may be a configuration corresponding to the immediate MDT. This is not limited in this application.

A factor for differentiation between priorities of MDT configurations is not limited in this application. In an example, differentiation between priorities of MDT configurations may originate from urgency levels of measurement tasks corresponding to the different MDT configurations. For example, a priority of an MDT configuration corresponding to a measurement task with higher urgency is higher than a priority of an MDT configuration corresponding to a measurement task with lower urgency. In this example, the MDT configuration with a higher priority may be understood as an MDT configuration corresponding to a more urgent MDT measurement task. In other words, a higher priority means that an MDT measurement task is more urgent. In another example, a priority of signaling-based MDT is higher than a priority of management-based MDT.

Specifically, the terminal device 120 locally stores the MDT configuration #B. The terminal device 120 is performing a measurement task based on the MDT configuration #B; or the terminal device 120 completes a measurement task that is based on the MDT configuration #B, and has not fed back a measurement result to the network device 110; or the terminal device 120 completes a measurement task that is based on the MDT configuration #B, and the terminal device 120 does not feed back all measurement results to the network device 110.

In conclusion, the MDT configuration #B may be an MDT configuration used by the terminal device 120 in a measurement process. The measurement process is a current measurement process of the terminal device 120, in other words, a measurement process that is being executed by the terminal device 120. The measurement process in this application includes that the terminal device 120 is performing MDT configuration-based measurement, and includes that the terminal device 120 has completed the MDT measurement and has not completed reporting of all measurement data. In other words, it may be considered that the terminal device 120 is in the measurement process from start of the MDT measurement to completion of reporting of all measurement results.

It may be understood that, that the MDT configuration #B is the MDT configuration used by the terminal device 120 in the measurement process may be: The terminal device 120 is performing MDT measurement based on the MDT configuration #B; or the terminal device 120 completes the measurement task that is based on the MDT configuration #B, but does not complete the reporting of all the measurement results that are based on the MDT configuration #B.

A source of the MDT configuration #B received by the terminal device 120 is not limited in this embodiment of this application. To be specific, the network device 110 may send the MDT configuration #B to the terminal device 120, or another network device may send the MDT configuration #B to the terminal device 120. In other words, a scenario in which a plurality of network devices or a same network device sends an MDT configuration to a same terminal device is not limited in this application.

S230: The terminal device 120 determines, based on the comparison result, whether to execute the MDT configuration #A.

In an example, if the comparison result indicates that the priority of the MDT configuration #A is lower than (or equal to) the priority of the MDT configuration #B, the terminal device 120 determines not to execute the MDT configuration #A. If the comparison result indicates that the priority of the MDT configuration #A is higher than (or equal to) the priority of the MDT configuration #B, the terminal device 120 determines to execute the MDT configuration #A.

That the terminal device 120 is not to execute the MDT configuration #A may be understood as: The terminal device 120 does not receive the MDT configuration #A; or the terminal device 120 receives the MDT configuration #A, but does not perform MDT measurement based on the MDT configuration #A.

It should be understood that the MDT configuration #B is an MDT configuration that does not expire, in other words, a timer (for example, a T330 timer) corresponding to the MDT configuration #B is within valid duration. That the terminal device 120 is performing the measurement task corresponding to the MDT configuration #B before receiving the MDT configuration #A includes: The terminal device 120 is performing measurement based on the MDT configuration #B, the measurement is completed and a result is not reported, or another case.

Optionally, that the terminal device 120 is performing the measurement task corresponding to the MDT configuration #B includes: Before timing of the T330 timer ends, the terminal device 120 is performing MDT measurement.

Specifically, after the MDT configuration #B is configured for the terminal device 120, the T330 timer may be started, and timing starts when the MDT configuration #B is received. The T330 timer may be considered as specific duration for performing measurement. When running time of the T330 timer ends, the measurement ends, and the terminal device 120 locally stores the measurement result for a period of time, for example, no more than 48 hours. An initial value of running duration of the T330 timer may be measurement duration indicated in the MDT configuration #B. The measurement duration may also be referred to as logging duration (logging duration).

According to the technical solutions provided in this embodiment, the terminal device 120 determines, based on a result of comparison between priorities of MDT configurations, whether to execute a new MDT configuration. It is avoided that an MDT configuration with a higher priority used by the terminal device 120 in a measurement process is directly overwritten by an MDT configuration with a lower priority, so that the terminal device 120 can use an appropriate MDT configuration to complete the measurement process, thereby improving MDT measurement efficiency. Specifically, the terminal device 120 determines the priority of the MDT configuration #A based on the indication information #1, compares the priority of the MDT configuration #A with the priority of the MDT configuration #B, and obtains the comparison result. The terminal device 120 determines, based on the comparison result, whether to use the MDT configuration #A to overwrite the MDT configuration #B. Overwriting between MDT configurations may be understood as: The terminal device 120 uses the new MDT configuration to perform MDT measurement, and deletes related information about the MDT configuration that is being executed previously. Optionally, the terminal device 120 may further delete a measurement result of the MDT configuration that is being executed previously. In addition, the "new MDT configuration" in this application may be an updated MDT configuration configured by the core network element 130 for the terminal device 110, is different from an existing MDT configuration of the terminal device 120, and may be used to perform a different measurement task.

For example, if the terminal device 120 is in an inter-RAT handover scenario, the terminal device 120 may separately receive an MDT configuration from a source network device and a target network device that use different RATs. For example, the source network device is an eNB, the target network device is a gNB, and the network device 110 is a target network device. In this case, the network device 110 may prepare to send, to the terminal device 120, the MDT configuration #A corresponding to NR, so that the terminal device 120 performs MDT measurement in an NR cell. If the terminal device 120 has stored the MDT configuration #B that corresponds to LTE and that is obtained from the source network device, and the terminal device 120 is in a measurement process in which the MDT configuration #B is used, the terminal device may determine, according to S220 and S230, whether to receive the MDT configuration #A.

In a possible implementation, when the comparison result indicates that the priority of the MDT configuration #A is lower than (or equal to) the priority of the MDT configuration #B, the terminal device 120 determines, based on the comparison result, not to execute the MDT configuration #A, and the method 200 further includes:
S240a: The terminal device 120 sends indication information #2 to the network device 110, to indicate that the MDT configuration #A is not to be executed.

Correspondingly, the network device 110 determines, based on the indication information #2, not to send the MDT configuration #A to the terminal device 120. In this way, delivery of the MDT configuration that is not to be executed by the terminal device 120 can be avoided, thereby reducing signaling overheads and communication resources.

In a possible implementation, the indication information #2 further includes at least one of the following:
remaining measurement time of the MDT configuration #B, or a remaining to-be-reported data amount in the measurement result corresponding to the MDT configuration #B.

In a possible implementation, the network device 110 may estimate time #A based on the remaining measurement time and/or the remaining to-be-reported data amount. The network device 110 sends the MDT configuration #A to the terminal device 120 after the time #A. The time #A is later than or equal to completion time ("completion time" for short below) of the measurement performed by the terminal device 120 by using the MDT configuration #B. In addition, the completion time may include time for the terminal device 120 to report the measurement result. In other words, when the priority of the MDT configuration #B is higher, the network device sends the MDT configuration #A to the terminal device 120 after estimating that the terminal device 120 completes the measurement process corresponding to the MDT configuration #B. The time #A and the completion time may be a time point or a period of time. This is not limited.

In an example, the remaining measurement time of the MDT configuration #B means that the terminal device 120 has started MDT measurement based on the MDT configuration #B, and has not completed the measurement task that is based on the MDT configuration #B. The terminal device 120 reports the remaining measurement time of the MDT configuration #B to the network device 110 by using the indication information #2, and the network device 110 estimates the time #A based on the remaining measurement time. For example, the network device 110 estimates the time #A with reference to information such as a reporting speed of a measurement result that has been reported by the terminal device 120, the remaining to-be-reported data amount, and remaining running time of the T330 timer.

In an example, the remaining to-be-reported data amount in the measurement result corresponding to the MDT configuration #B means that the terminal device 120 completes the measurement task that is based on the MDT configuration #B, and is reporting the measurement result that is based on the MDT configuration #B, but does not complete reporting of all measurement results. The terminal device 120 reports the remaining to-be-reported data amount to the network device 110 by using the indication information #2, and the network device 110 estimates the time #A based on the remaining to-be-reported data amount.

Specifically, after performing MDT measurement in an RRC non-connected state, the terminal device 120 indicates, to a network side after entering an RRC connected state, that to-be-measured data needs to be reported. The network device 110 may send indication information to the terminal device 120, to indicate the terminal device 120 to report the measurement result. When reporting the measurement result, the terminal device 120 may further indicate whether there is still a to-be-reported measurement result after the current reporting ends. Therefore, the network device 120 may estimate, based on a data amount of a measurement result actually reported each time, a remaining to-be-reported measurement result, and frequency at which the network device 110 delivers, to the terminal device 120, indication information for reporting the measurement result, time for completing the reporting of all the measurement results.

In another implementation, the terminal device 110 may estimate, based on information such as the remaining measurement time of the MDT configuration #B and/or the remaining to-be-reported data amount in the measurement result corresponding to the MDT configuration #B, the completion time of the measurement by using the MDT configuration #B, and notify the network device 120 of the completion time, so that the network device 120 may send the MDT configuration #A with the lower priority to the terminal device 110 after the completion time, for example, after the time #A. In this implementation, the indication information #2 may include the completion time, but does not carry the remaining measurement time and/or the remaining to-be-reported data amount.

In this embodiment of this application, data in the remaining to-be-reported data amount is measurement data. For example, the measurement data includes reference signal received power (reference signal received power, RSRP), reference signal received quality (reference signal received quality, RSRQ), and the like. This is not limited in this application.

In a possible implementation, the network device 110 retains the MDT configuration #A, and delivers the MDT configuration #A to the terminal device 120 after the terminal device 120 completes the measurement task that is based on the MDT configuration #B.

In a possible implementation, the network device 110 sends the MDT configuration #A to a target network device after cell handover completed by the terminal device 120, and the target network device delivers the MDT configuration #A.

In a possible implementation, when the comparison result indicates that the priority of the MDT configuration #A is higher than the priority of the MDT configuration #B, the terminal device 120 determines, based on the comparison result, to execute the MDT configuration #A. The method 200 further includes:
S240b: The terminal device 120 sends indication information #3 to the network device 110, where the indication information #3 indicates that the terminal device 120 is to execute the MDT configuration #A.

Correspondingly, the network device 110 determines, based on the indication information #3, to send the MDT configuration #A to the terminal device 120.

S240c: The terminal device 120 receives information #1 from the network device 110, where the information #1 includes the MDT configuration #A.

S240d: The terminal device 120 performs MDT measurement based on the MDT configuration #A. In this way, the terminal device 120 can complete a measurement task that is based on an MDT configuration with a higher priority.

In a possible implementation, the indication information #1 includes the MDT configuration #A. In this implementation, if the comparison result indicates that the priority of the MDT configuration #A is lower than (or equal to) the priority of the MDT configuration #B, S230 further includes: The terminal device 120 determines not to perform MDT measurement based on the MDT configuration #A. If the comparison result indicates that the priority of the MDT configuration #A is higher than (or equal to) the priority of the MDT configuration #B, S230 further includes: The terminal device 120 determines to perform MDT measurement based on the MDT configuration #A.

In a possible implementation, a priority is indicated by a number. For example, the priority of the MDT configuration #A is 1, and the priority of the MDT configuration #B is 2. A larger priority number may indicate a higher priority of an MDT configuration, and vice versa.

In a possible implementation, a priority is indicated by a level. For example, the priority of the MDT configuration #A is a level A, and the priority of the MDT configuration #B is a level B. It may be specified that importance of the level B is higher than that of the level A, and vice versa.

In conclusion, in this application, a priority can be indicated by the number or the level, or a priority can be indicated in another manner.

In a possible implementation, the method 200 further includes:
S250: The terminal device 120 sends information #2 to the network device 110, where the information #2 includes the comparison result.

Specifically, after determining the comparison result based on the priority of the MDT configuration #A and the priority of the MDT configuration #B, the terminal device 120 reports the comparison result to the network device 110.

In this application, the network device 110 can obtain the result of the comparison between the MDT configuration #A and the MDT configuration #B, and can adjust a subsequent MDT configuration delivery process based on the comparison result, to avoid delivering an MDT configuration whose priority is lower than that of the MDT configuration #B to the terminal device 120, thereby reducing signaling overheads and communication resources.

Optionally, the network device 110 can determine, based on the comparison result, whether to send the MDT configuration #A to the terminal device 120.

Specifically, if the network device 110 determines, based on the comparison result, that the priority of the MDT configuration #A is higher than or equal to the priority of the MDT configuration #B, the network device 110 is to send the MDT configuration #A to the terminal device 120. If the network device 110 determines, based on the comparison result, that the priority of the MDT configuration #A is lower than or equal to the priority of the MDT configuration #B, the network device 110 is not to send the MDT configuration #A to the terminal device 120.

Optionally, the information #2 further includes the priority of the MDT configuration #B. In this way, in this application, the network device 110 can obtain priority information of the MDT configuration #B, and adjust a subsequent MDT configuration delivery process based on the priority information of the MDT configuration #B, to avoid delivering an MDT configuration whose priority is lower than that of the MDT configuration #B to the terminal device 120, thereby reducing signaling overheads and communication resources.

In a possible implementation, the network device 110 receives the comparison result and/or the priority of the MDT configuration #B, and the method 200 further includes:
S260: The network device 110 reports the comparison result and/or the priority of the MDT configuration #B to the core network element 130.

Optionally, the network device 110 reports information such as the remaining measurement time and/or the remaining to-be-reported data amount to the core network element.

Correspondingly, after receiving the comparison result and/or the priority of the MDT configuration #B that are/is reported by the network device 110, the core network element 130 may increase a priority of a subsequent MDT configuration based on the comparison result, the priority of the MDT configuration #B, and/or the like, or determine, based on the information such as the remaining measurement time and the remaining to-be-reported data amount, to wait for a period of time and then resend the new MDT configuration to the network device 110.

In a possible implementation, when the priority of the MDT configuration #A is higher than that of the MDT configuration #B, in other words, when the MDT configuration #A sent by the core network element 130 to the network device 110 is successfully delivered to the terminal device 110, the network device 110 may also report the comparison result. After receiving the comparison result, the core network element 130 reduces a priority of a subsequent MDT configuration, to balance use of measurement resources of the terminal device 120.

In conclusion, the terminal device 120 determines, based on the result of the comparison between the priorities of the MDT configuration #A and the MDT configuration #B, whether to execute the MDT configuration #A. When the priority of the MDT configuration #A is lower than the priority of the MDT configuration #B used in the current measurement process, the terminal device 120 indicates, to the network device 110, that the MDT configuration #A is not to be received or the terminal device 120 is not to use the received MDT configuration #A for measurement. In this way, it is avoided that an MDT configuration with a higher priority used by the terminal device 120 in the measurement process is directly overwritten by an MDT configuration with a lower priority, so that the terminal device 120 can use an appropriate MDT configuration to complete the measurement process, thereby improving MDT measurement efficiency. In addition, when the priority of the MDT configuration #A is higher than the priority of the MDT configuration #B, the terminal device 120 uses the MDT configuration #A to overwrite the MDT configuration #B, so that the terminal device 120 can complete a measurement task corresponding to the MDT configuration with the higher priority.

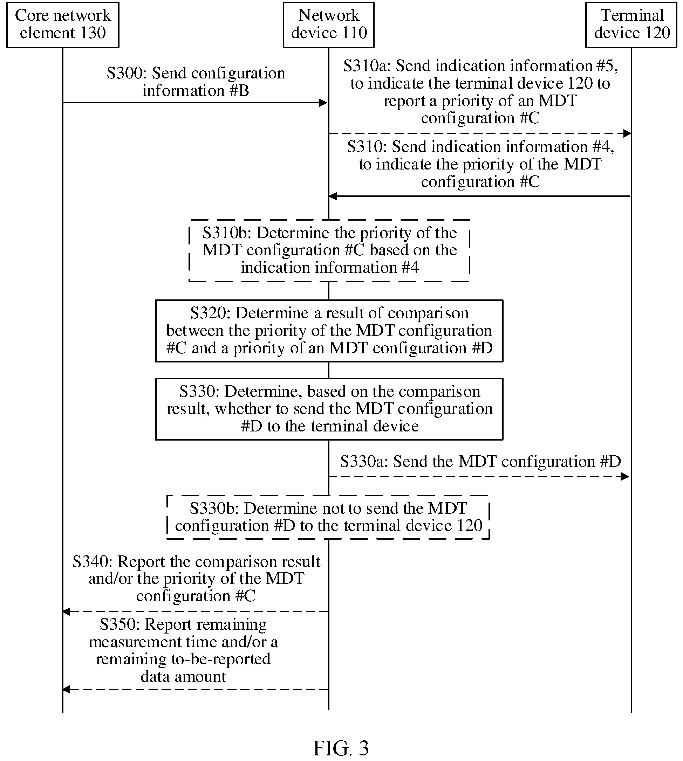

The following further describes the information transmission method in embodiments of this application with reference to FIG. 3. It should be understood that an embodiment shown in FIG. 3 and the embodiment shown in FIG. 2 may be coupled to each other, and may be mutually referenced.

The embodiment shown in FIG. 2 places extra emphasis on performing comparison between priorities of MDT configurations by the terminal device 120, and the embodiment shown in FIG. 3 places extra emphasis on performing comparison between priorities of MDT configurations by the network device 110. Although execution bodies of the two embodiments are different, a same or similar technical means may exist in the two embodiments, and content that has been described in the embodiment shown in FIG. 2 is not described again.

FIG. 3 is a schematic interaction flowchart of an information transmission method 300 according to an embodiment of this application. The method procedure in FIG. 3 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 3, the method 300 includes the following steps.

S300: The network device 110 receives configuration information #B from a core network element 130.

Specifically, the configuration information #B includes an MDT configuration #D and priority information of the MDT configuration #D. For detailed descriptions of S300, refer to step S200.

S310: The terminal device 120 sends indication information #4 to the network device 110, to indicate a priority of an MDT configuration #C.

Correspondingly, the network device 110 receives the indication information #4 from the terminal device 120, and determines the priority of the MDT configuration #C based on the indication information #4.

The MDT configuration #C is an MDT configuration used by the terminal device 120 in a current measurement process. For example, the core network element 130 sends configuration information #C to the network device 110, where the configuration information #C includes the MDT configuration #C and priority information of the MDT configuration #C. Then, the network device 110 sends the configuration information #C to the terminal device 120. The terminal device 120 performs MDT measurement based on the configuration information #C. For descriptions of the MDT configuration #C, refer to the descriptions of the MDT configuration #B.

It may be understood that a source of the MDT configuration #C received by the terminal device 120 is not limited in this embodiment of this application. To be specific, the network device 110 may send the MDT configuration #C to the terminal device 120, or another network device may send the MDT configuration #C to the terminal device 120. In other words, a scenario in which a plurality of network devices or one network device sends the MDT configuration to the terminal device is not limited in this application. In addition, the configuration information #C may alternatively be sent by a network element in another type of core network to the network device 110 or another network device. This is not limited in this application.

For example, the terminal device 120 supports a plurality of RATs including LTE and NR. An MME may send an MDT configuration corresponding to the LTE to the terminal device 120 through an eNB, and an AMF may send an MDT configuration corresponding to the NR to the terminal device 120 through a gNB.

In a possible implementation, before S310, the method 300 includes:
S310a: The network device 110 sends indication information #5 to the terminal device 120, where the indication information #5 indicates the terminal device 120 to report the priority of the MDT configuration #C to the network device 110.

Specifically, the network device 110 indicates the terminal device 120 to report the priority of the MDT configuration #C used by the terminal device 120 in the measurement process.

It should be understood that, because the terminal device 120 may receive a plurality of MDT configurations from at least one network device including the network device 110, the network device 110 does not know the priority of the MDT configuration used by the terminal device 120 in the current measurement process. Therefore, the network device 110 sends the indication information #5 to the terminal device 120, to indicate the terminal device 120 to report, to the network device 110, the priority of the MDT configuration used in the current measurement process.

In a possible implementation, the method 300 further includes:
S310b: The network device 110 determines the priority of the MDT configuration #C based on the indication information #4.

Specifically, the network device determines, based on the priority of the MDT configuration #C, whether to deliver the MDT configuration #D to the terminal device 120. In this way, for the terminal device 120, the MDT configuration #C with the higher priority is not directly overwritten by the MDT configuration #D with a lower priority.

In a possible implementation, after the terminal device 120 enters an RRC connected state, if the terminal device 120 has stored a measurement result of the MDT configuration #C, and a currently accessed cell is within a reporting scope, in RRC reestablishment related signaling, the terminal device 120 not only indicates that there is a to-be-reported measurement result locally, but also synchronously reports the priority information of the MDT configuration #C corresponding to the measurement result.

In a possible implementation, after the terminal device 120 enters an RRC connected state, if the terminal device 120 does not have a measurement result corresponding to the MDT configuration #C and the MDT measurement is being performed (that is, a measurement time limit does not expire), the terminal device 120 reports the priority information of the MDT configuration #C in RRC reestablishment related signaling.

S320: The network device 110 determines a result of comparison between the priority of the MDT configuration #C and the priority of the MDT configuration #D.

Specifically, the network device 110 performs priority comparison based on the priority that is of the MDT configuration #C and that is reported by the terminal device 120 and the priority that is of the MDT configuration #D and that is delivered by the core network element, to obtain the comparison result. The network device 110 determines, based on the comparison result, whether to deliver the MDT configuration #D to the terminal device 120.

S330: The network device 110 determines, based on the comparison result, whether to send the MDT configuration #D to the terminal device 120.

In an example, when the comparison result indicates that the priority of the MDT configuration #D is higher than (or equal to) the priority of the MDT configuration #C, the network device 110 determines to send the MDT configuration #D to the terminal device 120.

In an example, when the comparison result indicates that the priority of the MDT configuration #D is lower than (or equal to) the priority of the MDT configuration #C, the network device 110 determines not to send the MDT configuration #D to the terminal device 120.

Optionally, when the comparison result indicates that the priority of the MDT configuration #D is lower than or equal to the priority of the MDT configuration #C, the network device 110 may wait for a period of time, in other words, delay for a period of time, before sending the MDT configuration #D to the terminal device 120. For example, the network device 110 estimates, based on remaining measurement time of the MDT configuration #C, a remaining to-be-reported data amount, and/or the like that are/is reported by the terminal device 120, time for delivering the MDT configuration #D to the terminal device 120.

In a possible implementation, the indication information #4 reported by the terminal device 120 to the network device 110 includes at least one of the following:
the remaining measurement time of the MDT configuration #C, or the remaining to-be-reported data amount in the measurement result corresponding to the MDT configuration #C. The remaining measurement time and/or the remaining to-be-reported data amount may be used by the network device 110 to estimate, when the comparison result indicates that the priority of the MDT configuration #D is lower than or equal to the priority of the MDT configuration #C, time for delaying sending the MDT configuration #D. For details, refer to the descriptions of the estimated time #A in the embodiment in FIG. 2. Details are not described again.

In a possible implementation, the indication information #4 reported by the terminal device 120 to the network device 110 includes completion time that is estimated by the terminal device 120 and that is for performing measurement based on the MDT configuration #C, and the network device determines, based on the completion time, time for delivering the MDT configuration #D to the terminal device 120.

In a possible implementation, when the network device 110 determines, based on the comparison result, that the priority of the MDT configuration #D is higher than or equal to the priority of the MDT configuration #C, S330 includes:
S330a: The network device 110 sends the MDT configuration #D to the terminal device 120.

In a possible implementation, when the network device 110 determines, based on the comparison result, that the priority of the MDT configuration #D is lower than or equal to the priority of the MDT configuration #C, S330 includes:
S330b: The network device 110 determines not to send the MDT configuration #D to the terminal device 120.

In a possible implementation, the method 300 further includes:
S340: The network device 110 reports the comparison result and/or the priority of the MDT configuration #C to the core network element 130.

In a possible implementation, the method 300 further includes:
S350: The network device 110 reports information such as the remaining measurement time and/or the remaining to-be-reported data amount to the core network element 130.

For content that the core network element 130 receives the remaining measurement time and/or the remaining to-be-reported data amount reported by the network device 110, and other content, refer to the foregoing descriptions.

According to the technical solutions provided in this application, the network device 110 determines, based on a result of comparison between a priority of a new MDT configuration and a priority of an MDT configuration that has been used by the terminal device during measurement, whether to deliver the new MDT configuration to the terminal device. In this way, a problem that an MDT configuration that has a higher priority and that has been used by the terminal device is overwritten by the new MDT configuration can be avoided. When the priority of the MDT configuration #D is lower than the priority of the MDT configuration #C, the network device 110 does not deliver the MDT configuration #D to the terminal device 120. It is avoided that the MDT configuration that has a higher priority and that is used by the terminal device 120 in the measurement process is directly overwritten by the MDT configuration with a lower priority, so that the terminal device 120 can complete the current measurement process, thereby improving MDT measurement efficiency. When the priority of the MDT configuration #D is higher than the priority of the MDT configuration #C, the network device 110 delivers the MDT configuration #D to the terminal device 120, and the terminal device 120 uses the MDT configuration #D to overwrite the MDT configuration #C, so that the terminal device 120 can complete a measurement task corresponding to the MDT configuration with a higher priority.

In the method embodiments shown in FIG. 2 and FIG. 3, the priority includes different granularities. For example, a priority of an MDT configuration may be for a current entire MDT configuration, or may be for a specific measurement scope (area scope) in the MDT configuration. For example, when a measurement scope of an MDT configuration is configured as a cell list, a priority of the MDT configuration may be indicated at a granularity of a cell. For example, different cells correspond to different priorities of MDT configurations. For another example, when a measurement scope of an MDT configuration is a tracking area (tracking area, TA) list, a priority of the MDT configuration may be indicated at a granularity of a tracking area code (tracking area code, TAC). For example, different TACs correspond to different priorities of MDT configurations.

In conclusion, a specific indication form or an indication granularity of the priority of the MDT configuration is not limited in this application.

In this application, an existing information element structure can be used for an information element structure like an MDT configuration transmitted between the core network element 130, the network device 110, and the terminal device 120, and a field indicating a priority of an MDT configuration is added. In other words, in this application, the MDT configuration and priority information of the MDT configuration can be indicated by using a combination of the existing information element structure and the newly added priority field.

In this application, a new information element structure can alternatively indicate the priority information of the MDT configuration, and a specific information element structure is not limited.

In this application, the priority of the MDT configuration can alternatively be independently indicated, and the priority information of the MDT configuration and the MDT configuration are not in a same information element. This is not limited in this application either.

With reference to the embodiments shown in FIG. 2 and FIG. 3, it can be learned that in this application, priorities of MDT configurations are indicated, and the terminal device or the network device can determine a corresponding processing policy based on a result of comparison between the priorities of the MDT configurations, to avoid a problem that the terminal device cannot complete a current MDT measurement process because a new MDT configuration directly overwrites an existing MDT configuration of the terminal device. In addition, information indicating the priority of the MDT configuration is added to MDT configuration information transmitted between the core network element, the network device, and the terminal device, so that the core network element may adjust the priority of the MDT configuration, to balance use of measurement resources of the terminal device. For example, if urgency of a new MDT configuration is higher, the core network element may increase a priority of the new MDT configuration, so that the terminal device or the network device determines, based on a result of comparison between priorities of MDT configurations, to use the MDT configuration with the higher priority to overwrite an existing MDT configuration of the terminal device, to perform a more urgent measurement task, and fully use measurement resources of the terminal device.

The foregoing describes the method embodiments in embodiments of this application, and the following describes corresponding apparatus embodiments.

To implement functions in the methods provided in embodiments of this application, a terminal and a network device may each include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

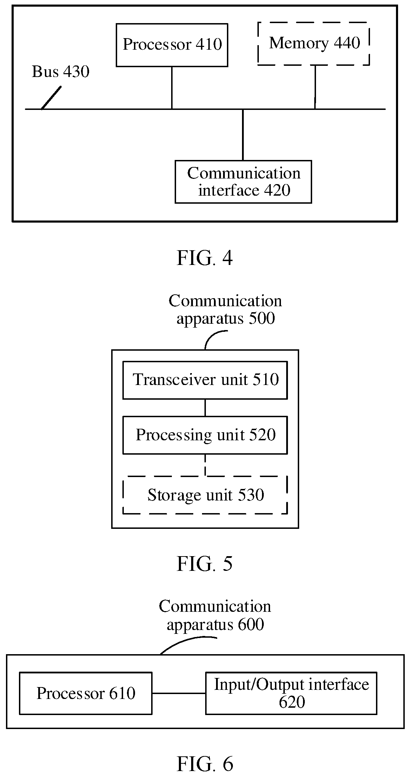

FIG. 4 is a block diagram of a communication apparatus 400 according to an embodiment of this application. The communication apparatus 400 includes a processor 410 and a communication interface 420. The processor 410 and the communication interface 420 may be connected to each other through a bus 430. The communication apparatus 400 shown in FIG. 4 may be a network device 110, or may be a terminal device 120.

Optionally, the communication apparatus 400 further includes a memory 440.

The memory 440 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 440 is configured to store related instructions and data.

The processor 410 may be one or more central processing units (central processing units, CPUs). When the processor 1310 is one CPU, the CPU may be a single-core CPU or a multi-core CPU.

When the communication apparatus 400 is the terminal device 120, for example, the processor 410 in the communication apparatus 400 is configured to perform the following operations: receiving indication information #1 from the network device 110, where the indication information #1 indicates a priority of an MDT configuration #A; determining a result of comparison between the priority of the MDT configuration #A and a priority of an MDT configuration #B; and determining, based on the comparison result, whether to execute the MDT configuration #A.

For another example, the following operations may be performed: receiving indication information #5 from the network device 110, where the indication information #5 indicates the terminal device 120 to report a priority of an MDT configuration #C to the network device 110; and sending indication information #4 to the network device 110, where the indication information #4 indicates the priority of the MDT configuration #C.

The foregoing content is merely used as an example for description. When the communication apparatus 400 is the terminal device 120, the communication apparatus 400 is responsible for performing the methods or steps related to the terminal device 120 in the foregoing method embodiments.

When the communication apparatus 1300 is the network device 110, for example, the processor 410 in the communication apparatus 400 is configured to perform the following operations: receiving indication information #4 from the terminal device 120, where the indication information #4 indicates a priority of an MDT configuration #C; determining a result of comparison between the priority of the MDT configuration #C and a priority of an MDT configuration #D; and determining, based on the comparison result, whether to send the MDT configuration #D to the terminal device 120.

For another example, the following operations may be performed: receiving configuration information #A from a core network element 130, where the configuration information #Aincludes an MDT configuration #A and priority information of the MDT configuration #A; and sending indication information #1 to the terminal device, where the indication information #1 indicates a priority of the MDT configuration #A.

The foregoing content is merely used as an example for description. When the communication apparatus 400 is the network device 110, the communication apparatus 400 is responsible for performing the methods or steps related to the network device 110 in the foregoing method embodiments.

The foregoing descriptions are merely examples. For specific content, refer to content shown in the method embodiments. In addition, for implementation of each operation in FIG. 4, refer to corresponding descriptions in the method embodiments shown in FIG. 2 and FIG. 3.

FIG. 5 is a block diagram of a communication apparatus 500 according to an embodiment of this application. The communication apparatus 500 may be the network device or the terminal device in the foregoing embodiments, or may be a chip or a module in the network device or the terminal device, and is configured to implement the methods in the foregoing embodiments. The communication apparatus 500 includes a transceiver unit 510 and a processing unit 520. The following describes the transceiver unit 510 and the processing unit 520 by using examples.

The transceiver unit 510 may include a sending unit and a receiving unit that are respectively configured to implement a sending function or a receiving function in the foregoing method embodiments. The transceiver unit 510 may further include a processing unit, configured to implement a function other than the sending function or the receiving function.

When the communication apparatus 500 is the terminal device 120, for example, the transceiver unit 510 is configured to receive indication information #1 from the network device 110, where the indication information #1 indicates a priority of an MDT configuration #A. The processing unit 520 is configured to determine a result of comparison between the priority of the MDT configuration #A and a priority of an MDT configuration #B. The processing unit 520 is further configured to determine, based on the comparison result, whether to execute the MDT configuration #A.

Optionally, the communication apparatus 500 further includes a storage unit 530, and the storage unit 530 is configured to store a program or code used to perform the foregoing methods.

The foregoing content is merely used as an example for description. When the communication apparatus 500 is the terminal device 120, the communication apparatus 500 is responsible for performing the methods or steps related to the terminal device 120 in the foregoing method embodiments.

When the communication apparatus 500 is the network device 110, for example, the transceiver unit 510 is configured to send indication information #1, where the indication information #1 indicates a priority of an MDT configuration #A; and the transceiver unit 510 is further configured to receive configuration information #A from a core network element 130, where the configuration information #A includes the MDT configuration #A and priority information of the MDT configuration #A.

Optionally, the communication apparatus 500 further includes a storage unit 530, configured to store a program or code used to perform the foregoing methods.

The foregoing content is merely used as an example for description. When the communication apparatus 500 is the network device 110, the communication apparatus 500 is responsible for performing the methods or steps related to the network device 110 in the foregoing method embodiments.

The foregoing content is merely used as an example for description. When the communication apparatus 500 is the terminal device 120, the communication apparatus 500 is responsible for performing the methods or steps related to the terminal device 120 in the foregoing method embodiments.

In addition, for implementation of each operation in FIG. 5, refer to corresponding descriptions of the content shown in the foregoing method embodiments. Details are not described herein again.

The communication apparatuses shown in FIG. 4 and FIG. 5 are configured to implement the content described in the foregoing method embodiments. Therefore, for specific execution steps and methods of the communication apparatuses shown in FIG. 4 and FIG. 5, refer to the content described in the foregoing method embodiments.

It should be understood that the transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below again.

FIG. 6 is a diagram of a communication apparatus 600 according to an embodiment of this application. The communication apparatus 600 may be configured to implement a function of the network device 110 or the terminal device 120 in the foregoing methods. The communication apparatus 600 may be a chip in the network device 110 or a chip in the terminal device 120. The communication apparatus 600 includes an input/output interface 620 and a processor 610. The input/output interface 620 may be an input/output circuit. The processor 610 may be a signal processor, a chip, or another integrated circuit that can implement the methods in this application. The input/output interface 620 is configured to input or output a signal or data.

For example, the communication apparatus 600 is the terminal device 120, and the input/output interface 620 is configured to receive indication information #1 from the network device 110, where the indication information #1 indicates a priority of an MDT configuration #A. The processor 610 is configured to determine a result of comparison between the priority of the MDT configuration #A and a priority of an MDT configuration #B. The processor 610 is further configured to determine, based on the comparison result, whether to execute the MDT configuration #A. The processor 610 is further configured to perform some or all steps of any method provided in this application.

For example, the communication apparatus 600 is the network device 110, and the input/output interface 620 is configured to receive configuration information #A from a core network element 130, where the configuration information #A includes an MDT configuration #A and priority information of the MDT configuration #A. The input/output interface 620 is further configured to send indication information #1 to the terminal device 120, where the indication information #1 indicates a priority of the MDT configuration #A. The processor 610 is configured to perform some or all steps of any method provided in this application.

In a possible implementation, the processor 610 executes instructions stored in a memory, to implement a function implemented by the network device 110 or the terminal device 120.

Optionally, the communication apparatus 600 further includes the memory.

Optionally, the processor and the memory are integrated together.

Optionally, the memory is outside the communication apparatus 600.

In a possible implementation, the processor 610 may be a logic circuit, and the processor 610 inputs/outputs a message or signaling through the input/output interface 620. The logic circuit may be a signal processor, a chip, or another integrated circuit that can implement the methods in embodiments of this application.

The foregoing descriptions of the communication apparatus 600 in FIG. 6 are merely an example for description. The communication apparatus 600 can be configured to perform the methods in the foregoing embodiments. For specific content, refer to the descriptions of the foregoing method embodiments. Details are not described herein again.

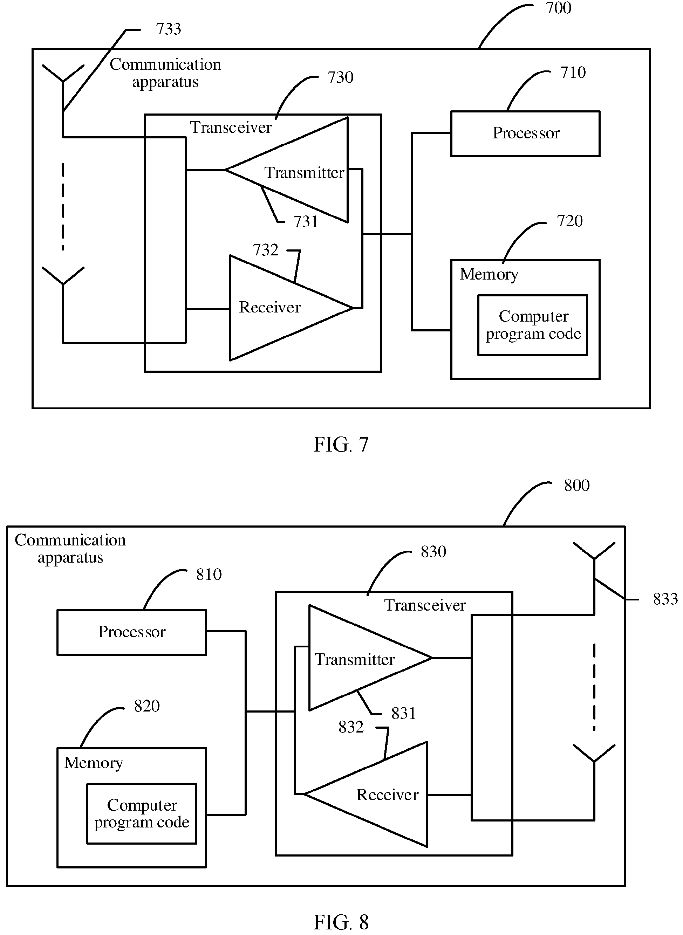

FIG. 7 is a block diagram of a communication apparatus 700 according to an embodiment of this application. The communication apparatus 700 may be a network device or a chip. The communication apparatus 700 may be configured to perform an operation performed by the network device in the foregoing method embodiments.

When the communication apparatus 700 is the network device, for example, a base station, FIG. 7 is a simplified diagram of a structure of the base station. The base station includes a part 710, a part 720, and a part 730. The part 710 is mainly configured to: perform baseband processing, control the base station, and the like. The part 710 is usually a control center of the base station, may be usually referred to as a processor, and is configured to control the base station to perform a processing operation on the network device side in the foregoing method embodiments. The part 720 is mainly configured to store computer program code and data. The part 730 is mainly configured to receive and send a radio frequency signal, and perform conversion between a radio frequency signal and a baseband signal. The part 730 may be usually referred to as a transceiver module, a transceiver machine, a transceiver circuit, a transceiver, or the like. The transceiver module in the part 730 may also be referred to as the transceiver machine, the transceiver, or the like, and includes an antenna 733 and a radio frequency circuit (not shown in the figure). The radio frequency circuit is mainly configured to perform radio frequency processing. Optionally, in the part 730, a component configured to implement a receiving function may be considered as a receiver, and a component configured to implement a sending function may be considered as a transmitter. In other words, the part 730 includes a receiver 732 and a transmitter 73 1. The receiver may also be referred to as a receiving module, a receiver machine, a receiver circuit, or the like, and the transmitter may be referred to as a transmitting module, a transmitter machine, a transmitter circuit, or the like.

The part 710 and the part 720 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors simultaneously.

In an implementation, the transceiver module in the part 730 is configured to perform a receiving and sending-related process performed by the network device in the embodiments shown in FIG. 2 and FIG. 3. The processor in the part 710 is configured to perform a processing-related process performed by the network device in the embodiments shown in FIG. 2 and FIG. 3.

In another implementation, the processor in the part 710 is configured to perform a processing-related process performed by a communication device in the embodiments shown in FIG. 2 and FIG. 3.

In another implementation, the transceiver module in the part 730 is configured to perform a receiving and sending-related process performed by a communication device in the embodiments shown in FIG. 2 and FIG. 3.

It should be understood that FIG. 7 is merely an example rather than a limitation. The network device including the processor, the memory, and the transceiver may not depend on the structures shown in FIG. 4 to FIG. 6.

When the communication apparatus 700 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

FIG. 8 is a block diagram of a communication apparatus 800 according to an embodiment of this application. The communication apparatus 800 may be a terminal device, a processor of the terminal device, or a chip. The communication apparatus 800 may be configured to perform an operation performed by the terminal device or a communication device in the foregoing method embodiments.

When the communication apparatus 800 is the terminal device, FIG. 8 is a simplified diagram of a structure of the terminal device. As shown in FIG. 8, the terminal device includes a processor, a memory, and a transceiver. The memory may store computer program code. The transceiver includes a transmitter 831, a receiver 832, a radio frequency circuit (not shown in the figure), an antenna 833, and an input/output apparatus (not shown in the figure).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 8 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 8, the terminal device includes the processor 810, the memory 820, and the transceiver 830. The processor 810 may also be referred to as a processing unit, a processing board, a processing module, a processing apparatus, or the like. The transceiver 830 may also be referred to as a transceiver unit, a transceiver machine, a transceiver apparatus, or the like.

Optionally, a component for implementing a receiving function in the transceiver 830 may be considered as a receiving module, and a component for implementing a sending function in the transceiver 830 may be considered as a sending module. In other words, the transceiver 830 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 810 is configured to perform a processing action on the terminal device side in the embodiments shown in FIG. 2 and FIG. 3, and the transceiver 830 is configured to perform receiving and sending actions on the terminal device side in FIG. 2 and FIG. 3.

For example, in an implementation, the processor 810 is configured to perform a processing action on the terminal device side in the embodiments shown in FIG. 2 and FIG. 3, and the transceiver 830 is configured to perform receiving and sending actions on the terminal device side in FIG. 2 and FIG. 3.

It should be understood that FIG. 8 is merely an example rather than a limitation. The terminal device including the transceiver module and the processing module may not depend on the structures shown in FIG. 4 to FIG. 6.

When the communication apparatus 800 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor. The processor is configured to invoke, from a memory, instructions stored in the memory and run the instructions, to enable a communication device on which the chip is installed to perform the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description.

Unless otherwise specified, "/" in the descriptions of embodiments of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that, in embodiments of this application, the terminal device, the access network device, or a core network device may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. An information transmission method, wherein the method is applied to a terminal device and comprises:
receiving first indication information from a network device, wherein the first indication information indicates a priority of a first minimization of drive-tests MDT configuration;
determining a result of comparison between the priority of the first MDT configuration and a priority of a second MDT configuration; and
determining, based on the comparison result, whether to execute the first MDT configuration, wherein
the second MDT configuration is an MDT configuration used by the terminal device in a measurement process.

2. The method according to claim 1, wherein when the comparison result indicates that the priority of the first MDT configuration is lower than the priority of the second MDT configuration, the method further comprises:
sending second indication information to the network device, wherein the second indication information indicates that the terminal device is not to execute the first MDT configuration.

3. The method according to claim 2, wherein the second indication information comprises at least one of the following:
remaining measurement time of the second MDT configuration, or a remaining to-be-reported data amount in a measurement result corresponding to the second MDT configuration.

4. The method according to any one of claims 1 to 3, wherein the first indication information comprises the first MDT configuration.

5. The method according to claim 1, wherein when the comparison result indicates that the priority of the first MDT configuration is higher than the priority of the second MDT configuration, the method further comprises:
sending third indication information to the network device, wherein the third indication information indicates that the terminal device is to execute the first MDT configuration; and
receiving first information from the network device, wherein the first information comprises the first MDT configuration.

6. The method according to claim 5, wherein the method further comprises:
performing MDT measurement based on the first MDT configuration.

7. The method according to any one of claims 1 to 6, wherein the method further comprises:
sending second information to the network device, wherein the second information comprises the comparison result.

8. The method according to claim 7, wherein the second information further comprises the priority of the second MDT configuration.

9. An information transmission method, wherein the method is applied to a network device and comprises:
receiving configuration information from a core network element, wherein the configuration information comprises a first minimization of drive-tests MDT configuration and priority information of the first MDT configuration; and
sending first indication information to a terminal device, wherein the first indication information indicates a priority of the first MDT configuration.

10. The method according to claim 9, wherein the method further comprises:
receiving second indication information from the terminal device, wherein the second indication information indicates that the terminal device is not to execute the first MDT configuration.

11. The method according to claim 10, wherein the second indication information comprises at least one of the following:
remaining measurement time of a second MDT configuration, or a remaining to-be-reported data amount in a measurement result corresponding to the second MDT configuration, wherein
the second MDT configuration is an MDT configuration used by the terminal device in a measurement process.

12. The method according to claim 11, wherein the method further comprises:
sending the first MDT configuration to the terminal device after first time, wherein
the first time is determined by the network device based on at least one of the remaining measurement time and the remaining to-be-reported data amount.

13. The method according to any one of claims 9 to 11, wherein the first indication information comprises the first MDT configuration.

14. The method according to claim 9, wherein the method further comprises:
receiving third indication information from the terminal device, wherein the third indication information indicates that the terminal device is to execute the first MDT configuration; and
sending first information to the terminal device, wherein the first information comprises the first MDT configuration.

15. The method according to claim 9, wherein the method further comprises:
receiving second information from the terminal device, wherein the second information comprises a result of comparison between the priority of the first MDT configuration and a priority of a second MDT configuration, and the second MDT configuration is an MDT configuration used by the terminal device in a measurement process.

16. The method according to claim 15, wherein when the comparison result indicates that the priority of the first MDT configuration is higher than the priority of the second MDT configuration, the method further comprises:
sending the first MDT configuration to the terminal device.

17. The method according to claim 15 or 16, wherein the method further comprises:
sending the comparison result to the core network element.

18. The method according to any one of claims 15 to 17, wherein the second information further comprises the priority of the second MDT configuration.

19. An information transmission method, wherein the method is applied to a network device and comprises:
receiving first indication information from a terminal device, wherein the first indication information indicates a priority of a first minimization of drive-tests MDT configuration;
determining a result of comparison between the priority of the first MDT configuration and a priority of a second MDT configuration; and
determining, based on the comparison result, whether to send the second MDT configuration to the terminal device, wherein
the first MDT configuration is an MDT configuration used by the terminal device in a measurement process.

20. The method according to claim 19, wherein when the comparison result indicates that the priority of the first MDT configuration is lower than the priority of the second MDT configuration, the method further comprises:
sending first information to the terminal device, wherein the first information comprises the second MDT configuration.

21. The method according to claim 19 or 20, wherein the method further comprises:
sending second indication information to the terminal device, wherein the second indication information indicates the terminal device to report the priority of the first MDT configuration to the network device.

22. The method according to any one of claims 19 to 21, wherein the first indication information comprises at least one of the following:
remaining measurement time of the first MDT configuration, or a remaining to-be-reported data amount in a measurement result corresponding to the first MDT configuration.

23. The method according to claim 22, wherein when the comparison result indicates that the priority of the first MDT configuration is higher than the priority of the second MDT configuration, the method further comprises:
sending the second MDT configuration to the terminal device after first time, wherein
the first time is determined by the network device based on at least one of the remaining measurement time and the remaining to-be-reported data amount.

24. The method according to any one of claims 19 to 23, wherein the method further comprises:
sending the comparison result to a core network element.

25. The method according to any one of claims 19 to 24, wherein the method further comprises:
receiving configuration information from the core network element, wherein the configuration information comprises the second MDT configuration and priority information of the second MDT configuration.

26. An information transmission method, wherein the method is applied to a terminal device and comprises:
receiving first indication information from a network device, wherein the indication information indicates the terminal device to report a priority of a first minimization of drive-tests MDT configuration to the network device; and
sending second indication information to the network device, wherein the second indication information indicates the priority of the first MDT configuration, wherein
the first MDT configuration is an MDT configuration used by the terminal device in a measurement process.

27. The method according to claim 26, wherein the method further comprises:
receiving first information from the network device, wherein the first information comprises a second MDT configuration, wherein
a priority of the second MDT configuration is higher than the priority of the first MDT configuration.

28. The method according to claim 26 or 27, wherein the second indication information comprises at least one of the following:
remaining measurement time of the first MDT configuration, or a remaining to-be-reported data amount in a measurement result corresponding to the first MDT configuration.

29. An information transmission method, wherein the method is applied to a core network element and comprises:
sending first configuration information to a network device, wherein the first configuration information comprises a first minimization of drive-tests MDT configuration and priority information of the first MDT configuration; and
sending second configuration information to the network device, wherein the second configuration information comprises a second MDT configuration and priority information of the second MDT configuration.

30. The method according to claim 29, wherein the method further comprises:
receiving a result that is of comparison between a priority of the first MDT configuration and a priority of the second MDT configuration and that is from the network device.

31. A communication apparatus, comprising a logic circuit and an input/output interface, wherein the input/output interface is configured to input and/or output a signal, and the logic circuit is configured to perform the method according to any one of claims 1 to 30.

32. A computer-readable storage medium, comprising a computer program or instructions, wherein when the computer program or the instructions are run on a computer, the method according to any one of claims 1 to 30 is performed.

33. A computer program product, comprising instructions, wherein when the instructions are run on a computer, the method according to any one of claims 1 to 30 is performed.

34. A computer program, wherein when the computer program is run on a computer, the method according to any one of claims 1 to 30 is performed.

35. A communication apparatus, wherein the communication apparatus comprises a unit or a module configured to perform the method according to any one of claims 1 to 8 or claims 26 to 28.

36. A communication apparatus, wherein the communication apparatus comprises a unit or a module configured to perform the method according to any one of claims 9 to 25.

37. A communication apparatus, wherein the communication apparatus comprises a unit or a module configured to perform the method according to claim 29 or 30.

38. A communication system, comprising a network device and a core network element, wherein
the network device is configured to perform the method according to any one of claims 9 to 25, and
the core network element is configured to perform the method according to claim 29 or 30.

39. The method according to claim 38, wherein the communication system comprises a terminal device, and the terminal device is configured to perform the method according to any one of claims 1 to 8 or claims 26 to 28.
